(19) Europäisches Patentamt
European Patent Office
Office européen des brevets

(11) **EP 3 698 924 B1**

(12) **EUROPÄISCHE PATENTSCHRIFT**

(45) Veröffentlichungstag und Bekanntmachung des Hinweises auf die Patenterteilung:
**04.09.2024 Patentblatt 2024/36**

(21) Anmeldenummer: **20153841.0**

(22) Anmeldetag: **27.01.2020**

(51) Internationale Patentklassifikation (IPC):
**B25B 29/02** *(2006.01)*   **B23P 19/06** *(2006.01)*

(52) Gemeinsame Patentklassifikation (CPC):
**B25B 29/02; B23P 19/067**

(54) **VERFAHREN ZUM DOKUMENTIERTEN ANZIEHEN ODER NACHZIEHEN EINER SCHRAUBVERBINDUNG**

METHOD FOR DOCUMENTED TIGHTENING OR RETIGHTENING A SCREW CONNECTION

PROCÉDÉ DE VISSAGE OU DE DÉVISSAGE ATTESTÉ D'UN RACCORD À VIS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.01.2019 DE 102019102133**
**15.02.2019 DE 102019103850**

(43) Veröffentlichungstag der Anmeldung:
**26.08.2020 Patentblatt 2020/35**

(73) Patentinhaber:
• **Hohmann, Frank**
**59581 Warstein (DE)**
• **Hohmann, Jörg**
**59872 Meschede (DE)**

(72) Erfinder:
• **Die Erfinder haben auf ihr Recht verzichtet, als solche bekannt gemacht zu werden.**

(74) Vertreter: **Janke Scholl Patentanwälte PartG mbB**
**Homberger Straße 5**
**40474 Düsseldorf (DE)**

(56) Entgegenhaltungen:
WO-A1-03/024670          DE-A1- 102012 105 654
DE-U1- 202012 104 427    DE-U1- 202013 010 307

**Beschreibung**

Die Erfindung betrifft ein Verfahren zum dokumentierten Anziehen oder Nachziehen einer Schraubverbindung bestehend aus einem Gewindebolzen und einer darauf aufgeschraubten und sich gegen eine Unterlage abstützenden Mutter, unter Einsatz einer axial arbeitenden Spannvorrichtung umfassend ein Zylindergehäuse, eine darin angeordnete Wechselbuchse, die an ihrem dem Gewindebolzen zugewandten Ende mit einem Innengewinde versehen und auf den Gewindebolzen aufschraubbar ist, und mindestens einen in dem Zylindergehäuse axial bewegbaren, mit hydraulischem Druck beaufschlagbaren Kolben, durch den die Wechselbuchse axial mitnehmbar ist, und ferner unter Einsatz eines als Modul außen an das Zylindergehäuse einsetzbaren Drehantriebs für die Mutter und einer mit einem Dokumentationsmodul versehenen Prozesssteuereinheit.

Hydraulisch betriebene, axial arbeitende Schraubenspannzylinder sind aus der DE 101 45 847 A1 bzw. WO 03/024670 A1, der WO 2008/092768 A2, der WO 2010/054959 A1 oder der DE 10 2015 104 133 A1 bekannt. Zum Spannen oder Nachspannen einer Schraubverbindung bestehend aus einem Gewindebolzen und einer darauf aufgeschraubten und sich gegen eine Unterlage abstützenden Mutter wird zunächst eine Wechselbuchse des Spannzylinders auf das freie, über die Mutter überstehende Ende des Gewindebolzens aufgeschraubt. Dazu ist die Wechselbuchse mit einem entsprechenden Innengewinde versehen. Die Wechselbuchse ist innerhalb eines hydraulischen Zylindergehäuses angeordnet und von zumindest einem Kolben umgeben. Der Kolben kann als Teil einer hydraulischen Kolben-Zylindereinheit die Wechselbuchse axial mitnehmen, wodurch der Gewindebolzen vorübergehend axial gedehnt wird. Während er gedehnt ist, wird die Mutter mittels eines außen an dem Zylindergehäuse angeordneten Drehantriebs nachgezogen, d. h. beigedreht.

Dieser Drehantrieb ist bei dem Schraubenspannzylinder gemäß der DE 101 45 847 A1 bzw. WO 03/024670 A1 als elektrischer Getriebemotor ausgebildet und weist einen Drehwinkelmessgeber auf, der den Drehwinkel des Drehantriebs erfasst. Ferner ist eine Recheneinrichtung vorhanden, welche aus dem erfassten Drehwinkel in Kombination mit der bekannten Gewindesteigung des Gewindebolzens dessen Dehnung sowie die sich daraus ergebende Vorspannkraft des Gewindebolzens errechnet, und dies dem Benutzer anzeigt. Des Weiteren ist als ein Verfahrensschritt offenbart, vor Einsetzen des Spannprozesses zunächst die Mutter mit einem ausreichenden Drehmoment anzuziehen, um Setzungsprozesse auszugleichen. Erst wenn dies geschehen ist, wird der Drehwinkelmessgeber auf Null gesetzt.

In der Regel werden die bei einem Schraubenspannprozess verwendeten Betriebsparameter sowie allgemeine, den Schraubfall betreffende Daten nicht systematisch erfasst und dokumentiert. Bei solchen Daten kann es sich beispielsweise um das Fabrikat, die Art oder den Typ der Gewindebolzen oder Muttern, sowie um Anzugs- und Drehmomentwerte der Bolzen und/oder Muttern handeln. Häufig fehlt es den Schraubenspannvorrichtungen auch an geeigneten Einrichtungen zum Erfassen und Dokumentieren solcher Daten. Die Dokumentation ist jedoch wichtig gerade bei Schraubverbindungen, bei denen eine permanente Kontrolle notwendig ist und bei denen aus Sicherheitsgründen eine ausreichend feste Schraubverbindung nachgewiesen werden muss. Dies ist beispielsweise bei Reaktor- oder Lagerbehältern mit chemischen oder nuklearen Gefahrgütern der Fall.

Problematisch kann sein, wenn dem Bediener der Spannvorrichtung nicht bekannt ist, in welchem Bereich der notwendige oder ideale hydraulische Druck und der damit verbundene Anzugsdruck bzw. die Anzugskraft für den zu verspannenden Bolzen liegt. Die Werte können je nach Art, Fabrikat oder Größe des Bolzens variieren. Dies kann dazu führen, dass nach dem Anziehen des Bolzens darin zu geringe oder überhöhte Längskräfte herrschen. Nebst diesen die Betriebssicherheit beeinflussenden Faktoren kann auch die Qualität und Präzision des An- oder Nachziehvorgangs gemindert sein, wenn die Bolzen nicht mit der idealen Spannkraft angezogen werden, und dadurch die Längskraft im Gewindebolzen nicht dem Optimum entspricht. Nachteilig ist auch die Verwendung eines ungeeigneten Drehmoments beim Beidrehen der Mutter.

Bekannt ist, z.B. aus der DE 10 2012 105 654 A1, Schraubverbindungen durch Scannen einer an der Schraubverbindung vorhandenen, individuellen Kennung, vorzugsweise einer Barcode-Kennung, eindeutig zu identifizieren. Die so ermittelte Kennung wird in Datenform in einem Dokumentationsmodul gespeichert. Mittels der Spannvorrichtung wird die Schraubverbindung durch axialen Zug am Gewindeende des Gewindebolzens längsgedehnt, und auch die dabei aufgewendete Anzugskraft und/oder der hydraulische Anzugsdruck wird in dem Dokumentationsmodul gespeichert. Währens des Längsdehnens wird die Mutter unter Verwendung z. B. eines Handdrehmomentschlüssels beigedreht.

Der Erfindung liegt die **Aufgabe** zugrunde, beim An- oder Nachziehen von hochfesten Schraubverbindungen mittels axial arbeitender Spannvorrichtungen eine für den einzelnen Schraubfall spezifische Dokumentation zu ermöglichen und so die Qualität und Reproduzierbarkeit des Schraubprozesses zu verbessern.

Zur **Lösung** dieser Aufgabe wird ein Verfahren mit den Merkmalen des Patentanspruchs 1 vorgeschlagen. Das Verfahren umfasst die folgenden Schritte:

    a) mittels des Drehantriebs Anziehen der Mutter mit einem für eine spaltfreie Anlage der Mutter an der Unterlage mindestens erforderlichen Anzugsmoment;

b) durch Aktivieren der Spannvorrichtung Längsdehnen der Schraubverbindung durch Ausüben axialen Zugs an dem über die Mutter hinausragenden Gewindeende des Gewindebolzens;

c) unter Aufrechterhalten des Längsdehnens erneutes Anziehen der Mutter mittels des Drehantriebs, hierbei Erfassen eines während dieses erneuten Anziehens zurückgelegten Drehwinkels mittels eines Drehwinkelsensors;

d) Errechnen der mit dem Längsdehnen verbundenen Längung des Gewindebolzens aus

- dem zurückgelegten Drehwinkel und
- der Gewindegeometrie der Schraubverbindung;

e) Errechnen einer Längskraft F im Gewindebolzen aus

- der Längung,
- dem Bolzendurchmesser und
- der Bolzenlänge;

und ist dadurch gekennzeichnet, dass die errechnete Längskraft zusammen mit einer die Schraubverbindung identifizierenden Kennung in dem Dokumentationsmodul gespeichert wird, dass das Anziehen und das erneute Anziehen der Mutter mit demselben Anzugsmoment unter Kraftausübung mittels eines an den Drehantrieb einsetzbaren Handwerkzeugs durchgeführt wird, dass das beim Anziehen und beim erneuten Anziehen der Mutter verwendete Drehmoment mittels eines Drehmomentsensors erfasst wird und ein entsprechender Drehmomentwert in dem Dokumentationsmodul gespeichert wird, und dass das Erfassen des Drehmoments beim Anziehen und erneuten Anziehen der Mutter in dem Modul erfolgt.

Unter Einsatz dieses Verfahrens werden wichtige, da für den einzelnen Schraubfall charakteristische Kenndaten so dokumentiert, dass die Qualität der erreichten Verschraubung auch nachträglich überprüfbar bleibt. Weitere, zusätzliche Daten können allgemeiner Natur sein und beispielsweise die Herstellerbezeichnung, das Fabrikat, die Artikelnummer, die Art, den Typ oder weitere physikalisch-technische Kenndaten der Schraubverbindung umfassen.

Ein Parameter von besonderer Bedeutung ist die nach dem Anziehen oder Nachziehen der Schraubverbindung in dem längsverformten Gewindebolzen herrschende Längskraft, die für die Zugspannung in dem Bolzen steht. Die Längskraft ist abhängig von der Längung und damit Dehnung, die der Gewindebolzen während des vorzugsweise hydraulisch durchgeführten Spannprozesses erfährt.

Daher wird in einem ersten Rechenschritt die mit dem Längsdehnen verbundene Längung des Gewindebolzens

- aus dem während des Beidrehens der Mutter zurückgelegten Drehwinkel

- und der Gewindegeometrie der Schraubverbindung

errechnet. Dabei ist der zurückgelegte Drehwinkel nicht unbedingt der Drehwinkel der Mutter selbst, sondern dies kann auch ein anderer, mit dem Drehwinkel der Mutter gekoppelter Drehwinkel sein. Zum Beispiel kann ein Getriebeelement des Drehantriebs mittels eines Drehwinkelsensors detektiert werden, oder der Drehwinkelsensor ist Bestandteil des für das Anziehen der Mutter verwendeten Handwerkzeug, oder der Drehwinkelsensor ist baulich in das Zylindergehäuse der Spannvorrichtung integriert.

Die in dem ersten Rechenschritt als Rechenparameter herangezogene Gewindegeometrie der Schraubverbindung ist die Gewindesteigung des Gewindes am Gewindebolzen und der Mutter. Denn aus den beiden geometrischen Größen Drehwinkel und Gewindesteigung lässt sich unmittelbar ein Längsmaß errechnen, hier also die Größe der mit dem axialen Spannen erreichten Längsdehnung des Gewindebolzens, also dessen Längung.

In einem zweiten Rechenschritt wird dann die in Zugrichtung wirkende Längskraft im Gewindebolzen errechnet, und zwar aus

- der in dem ersten Rechenschritt ermittelten Längung des Gewindebolzens,

- dem Bolzendurchmesser des Gewindebolzens

- und der Bolzenlänge.

Hierbei ist die für die Berechnung herangezogene Bolzenlänge nicht die absolute Länge des Gewindebolzens einschließlich seines erweiterten Bolzenkopfes. Maßgeblich ist vielmehr jene Länge, auf der sich der Gewindebolzen nennenswert verformt. Die insoweit maßgebliche Länge bilden Teile des Gewindeabschnitts des Gewindebolzens und, falls vorhanden, ein gewindeloser Schaftabschnitt des Gewindebolzens. Die in dem zweiten Rechenschritt herangezogene, maßgebliche Bolzenlänge ist dabei nur jene Länge auf dem Gewindeabschnitt und gegebenenfalls auf dem Schaftabschnitt, welche sich zwischen dem Bolzenkopf und der sich ebenfalls im Wesentlichen starr verhaltenden Mutter erstreckt. Denn auf diesem Längsabschnitt des Bolzens findet beim Spannprozess die Längung statt.

Um für die Längskraft im Gewindebolzen einen genauen Wert errechnen zu können, kommt es auf die Genauigkeit und die Reproduzierbarkeit beim Nachziehen der Mutter an. Denn beim Nachziehen der Mutter kann es Setzungsprozesse geben, vor allem aufgrund von Unebenheiten an den Kontaktflächen.

Aus diesem Grunde wird mehrstufig vorgegangen. In dem obigen Verfahrensschritt a) wird die Mutter, vorzugsweise während die Spannvorrichtung in einer Vorstufe mit einem nur geringen Druck von z.B. 50 bar Hydraulikdruck betrieben wird, mittels des Drehantriebs mit einem solchen Anzugsmoment angezogen, dass Setzungsprozesse weitgehend eliminiert sind und es zu einer weitgehend spaltfreien Anlage der Mutter an der Unterlage kommt.

Erst nachdem der weitgehend spaltfreie Kontakt der Mutter zur Unterlage sichergestellt ist, erfolgt in Schritt b) das Aktivieren der Spannvorrichtung mit dem eigentlichen hydraulischen Systemdruck von z.B. 1500 bar, und damit das Längsdehnen der Schraubverbindung durch Ausüben eines hohen axialen Zugs am Gewindeende des Gewindebolzens. Unter Aufrechterhaltung des hohen axialen Zugs erfolgt dann in Schritt c) mittels des Drehantriebs das erneute Nachziehen bzw. Beidrehen der Mutter, und das Erfassen eines während dieses erneuten Nachziehens zurückgelegten Drehwinkels mittels des Drehwinkelsensors.

Es wird, um das Risiko von Fehlbedienungen durch den Benutzer möglichst gering zu halten, für das erneute Nachziehen der Mutter nach Schritt c) dasselbe Anzugsmoment verwendet, wie bei dem erstmaligen Nachziehen der Mutter nach Schritt a). Ein erneutes Einstellen des Drehmomentschlüssels ist auf diese Weise nicht erforderlich.

Auf Grundlage der Maßnahmen gemäß der Verfahrensschritte a) bis c) erfolgen die Rechenschritte d) und e). Dabei wird in einem ersten Rechenschritt die mit dem Längsdehnen verbundene Längung des Gewindebolzens

- aus dem während des erneuten Nachziehens der Mutter zurückgelegten Drehwinkel

- und der Gewindegeometrie der Schraubverbindung

  errechnet. In einem darauf aufbauenden zweiten Rechenschritt wird die Längskraft im Gewindebolzen aus

  - der Längung,

  - dem Bolzendurchmesser

  - und der maßgeblichen Bolzenlänge

errechnet. Ferner wird in einem weiteren Verfahrensschritt die so errechnete Längskraft im Gewindebolzen zusammen mit einer die Schraubverbindung identifizierenden Kennung als Datensatz in dem Dokumentationsmodel gespeichert.

Die Identifizierung der einzelnen Schraubverbindung erfolgt durch Scannen, und das Identifikationsergebnis wird in dem Dokumentationsmodul gespeichert. In dem Dokumentationsmodul kann der identifizierten Schraubverbindung zusätzlich ein Datum, eine Uhrzeit, eine Projektnummer oder andere Daten zugeordnet werden. Auch diese Daten werden in dem gemeinsamen Datensatz mit abgespeichert, und sind so jederzeit überprüfbar.

Die Daten werden vorzugsweise in einer gemeinsamen Datei gespeichert, die auf einem Server, einer externen Recheneinheit oder in einer Datencloud abgelegt wird. Gleiches gilt für die aufgewendete Anzugskraft und/oder den verwendeten hydraulischen Anzugsdruck, wie auch für das beim Nachziehen der Mutter tatsächlich aufgewendete Drehmoment. Die Daten werden in dem Dokumentationsmodul als gemeinsamer Datensatz gespeichert. Diese Dokumentation ermöglicht eine auch nachträglich jederzeit überprüfbare Qualitäts- und Zustandsüberprüfung jeder einzelnen Schraubverbindung, etwa für eine Zertifizierung.

Das beim Nachziehen der Mutter mittels des Drehantriebs tatsächlich aufgewendete Drehmoment wird messtechnisch erfasst, und der Messwert wird in dem Dokumentationsmodul dokumentiert. Zur Detektion des Drehmoments kommt ein in dem Drehantrieb angeordneter Drehmomentsensor zum Einsatz.

Gemäß einer Ausgestaltung des Verfahrens wird dem Bediener, nach der Identifikation der Schraubverbindung, eine in einer Datenbank gespeicherte Anzugskraft und/oder ein Anzugsdruck von der Prozesssteuereinheit vorgeschlagen, bevor der Bediener die Spannvorrichtung aktiviert. Die Prozesssteuereinheit kann dazu auf eine elektronische Datenbank zugreifen. Darin sind für den Typ der jeweils identifizierten Schraubverbindung optimale oder zu empfehlende Werte und/oder Wertebereiche für Anzugskräfte und/oder hydraulische Anzugsdrücke gespeichert.

Sollte der Bediener hingegen aufgrund eigener Erfahrungen eine andere Anzugskraft und/oder einen anderen Anzugsdruck bevorzugen, stimmt er dem Parametervorschlag der Prozesssteuereinheit nicht zu. Er gibt dann manuell einen Wert ein und aktiviert dann die Spannvorrichtung. Auch dies kann in dem Dokumentationsmodul dokumentiert werden.

Gemäß einer anderen Ausgestaltung wird, nach Identifikation der Schraubverbindung, eine in der Datenbank für genau diesen Verschraubungstyp als optimal gespeicherte Anzugskraft und/oder ein Anzugsdruck von der Prozesssteuereinheit ausgewählt, und die Hydraulikpumpe des Schraubenspannzylinders automatisch, also selbstständig, auf diesen Druck gefahren. Die Hydraulikpumpe, welche über entsprechende Zu- und Ableitungen mit dem Kolbenraum des Schraubenspannzylinders verbunden ist, wird also signaltechnisch von der Prozesssteuereinheit auf einen bestimmten Pumpendruck angesteuert.

Zur Durchführung des Verfahrens wird eine hydraulisch angetriebene Spannvorrichtung verwendet. Diese umfasst ein als hydraulischer Zylinder ausgebildetes Zylindergehäuse, eine in dem Zylindergehäuse angeordnete Wechselbuchse, die an ihrem dem Gewindebolzen zugewandten Ende mit einem Innengewinde versehen und auf den Gewindebolzen aufschraubbar ist, und mindestens einen in dem Zylindergehäuse axial bewegbaren, mit einer Hydraulikversorgung verbindbaren Kolben, durch den die Wechselbuchse zentral hindurchführt und vermöge dessen die Wechselbuchse axial mitnehmbar ist.

Das Zylindergehäuse oder ein damit starr verbundenes Bauteil stützt sich an jener Unterlage ab, beispielsweise einem Maschinenelement, gegen die sich auch die Mutter abstützt. Vor allem bei Einsatz einer hydraulischen Spannvorrichtung ist das beschriebene Verfahren von Vorteil. Denn beim hydraulischen Längsdehnen des Gewindebolzens kommt es zu einer enormen Längskraft in dem Gewindebolzen. Das Ermitteln und Dokumentieren dieser Längskraft ist daher von besonderer Bedeutung für die auch nachträgliche Beurteilung der Qualität des Spannprozesses. Bei sehr hohen Anzugskräften und/oder Anzugsdrücken besteht immer die Gefahr eines Herausspringens oder Herausschnellens des stark auf Zug belasteten Gewindebolzens. Daher ist die richtige Auswahl von für die identifizierte Schraubverbindung geeigneten und/oder optimalen Anzugskräften und/oder Anzugsdrücken vorteilhaft, sei es mit oder ohne Freigabe durch den Nutzer.

Bei der Vorbereitung des Spannprozesses lässt sich die Wechselbuchse mit dem ohnehin für das Beidrehen der Mutter verwendeten Handwerkzeug auf den Gewindebolzen aufschrauben. Das Aufschrauben der Wechselbuchse auf den Bolzen einerseits und das Beidrehen der Mutter andererseits erfolgen in diesem Fall mit ein- und demselben Handwerkzeug, z. B. einem Drehmomentschlüssel mit Ratschenmechanismus.

Die Kennung der Schraubverbindung wird mit einem Sensor gescannt, insbesondere einem Barcodescanner. Dabei kann es sich um einen optischen Sensor handeln. Der Sensor kann integrierter Bestandteil in dem Schraubenspannzylinder, Bestandteil des verwendeten Handwerkzeugs oder eines separaten Geräts sein.

Der Sensor bzw. Barcodescanner kann insbesondere außen an oder innen in dem Schraubenspannzylinder angeordnet sein.

Hingegen kann die Anordnung des Sensors an dem Handwerkzeug Vorteile hinsichtlich der Flexibilität und der Handhabbarkeit des Scanners haben. Denn das Handwerkzeug ist kompakt und von geringerem Gewicht als die schwere Spannvorrichtung.

Als Prozesssteuereinheit dient ein mobiler Computer, ein entsprechend programmierter Tablet-Computer oder ein Smartphone. Wichtig ist, dass die Steuereinheit über eine Anzeigeeinheit und über eine Eingabeeinheit verfügt. Anzeigeeinheit und Eingabeeinheit können z. B. gemeinsam in einem Touch-Screen verwirklicht sein. Der Sensor zur Identifizierung der Kennung ist signaltechnisch mit der Prozesssteuereinheit verbunden.

Die Spannvorrichtung und/oder das Handwerkzeug können mit einer signaltechnisch mit der Prozesssteuereinheit verbundenen Sende- und Empfangseinheit versehen sein, vermöge derer der Datenaustausch mit der Prozesssteuereinheit erfolgt. Auch die Prozesssteuereinheit weist in diesem Fall eine Sende- und Empfangseinheit auf.

Die Sende- und Empfangseinheiten können kabellos oder kabelgebunden miteinander in Signalverbindung stehen. Geeignet sind beispielsweise WLAN, Funk oder UMTS. Nahezu jede moderne kabellose Signalübertragungsform kann sich eignen.

Vorteilhaft ist für die Prozesssteuereinheit und für den die Kennung aufnehmenden Sensor ein gemeinsames Applikationsprogramm vorhanden, welches z. B. in einer Recheneinheit installiert ist.

Das Beidrehen der Mutter erfolgt mittels des außen an der Spannvorrichtung angeordneten Drehantriebs. Der Drehwinkelsensor kann Bestandteil des Drehantriebs sein. Der Drehwinkelsensor erfasst einen Drehwinkel, welcher während des Anziehens bzw. Beidrehens zurückgelegt wird.

Alternativ kann der Drehwinkelsensor an dem Handwerkzeug, also dem Drehmomentschlüssel, angeordnet sein. Eine solche Anordnung kommt vor allem dann in Betracht, wenn das Handwerkzeug als eine Ratsche mit einem entsprechenden Drehmechanismus ausgebildet ist.

Der erfasste Winkelwert kann z. B. in dem Dokumentationsmodul gespeichert werden. Hierzu ist der Drehwinkelsensor, z. B. über das Applikationsprogramm, signaltechnisch mit der Prozesssteuereinheit verbunden, wodurch der erfasste Drehwinkelwert einer rechentechnischen Auswertung durch die Prozesssteuereinheit zur Verfügung steht. Bei dieser Auswertung wird aus dem während des Beidrehens der Mutter zurückgelegten Drehwinkelwert in Verknüpfung mit der bekannten Gewindegeometrie der Schraubverbindung, also insbesondere der Gewindesteigung am Gewindebolzen und an der Mutter, die erzielte Dehnung und damit Längung des Gewindebolzens berechnet. Dieser errechnete Wert der Längung kann in dem Dokumentationsmodul gespeichert und so dauerhaft dokumentiert werden.

Ist der Drehwinkel entsprechend der Längung des Gewindebolzens zurückgelegt und wird die Mutter mit einem vorgegebenen Drehmoment bis zu ihrer spaltfreien Anlage beigedreht, so ist sichergestellt, dass der Gewindebolzen mit der richtigen Kraft längsgedehnt wurde, und dass die in dem gedehnten Gewindebolzen herrschende Zugkraft bzw. Längskraft einen bestimmten, für den jeweiligen Bolzentyp optimalen Wert aufweist, zumindest in einem entsprechenden Wertebereich liegt.

Rechnerisch ermittelt wird die Zug- bzw. Längskraft im Gewindebolzen aus der zuvor errechneten Längung des Gewindebolzens, dem Bolzenquerschnitt und hier insbesondere dessen Durchmesser, und der von der Dehnung erfassten Bolzenlänge.

Das Dokumentationsmodul umfasst einen Speicher und/oder eine Datenbank. Darin können die Daten der Identifizierung und des Anzugs- und Beidrehvorgangs gespeichert und später abgerufen werden, insbesondere die aufgewendete Anzugskraft und/oder der Anzugsdruck, das tatsächlich aufgewendete Handdrehmoment und die aufgrund des Spannprozesses in dem Gewindebolzen herrschende Zugkraft, d.h. Längskraft.

Weitere Einzelheiten und Vorteile des Verfahrens ergeben sich aus der nachfolgenden Beschreibung eines auf der Zeichnung dargestellten Ausführungsbeispiels. Es zeigen:

Fig. 1   eine Darstellung eines zwei Maschenteile verspannenden Gewindebolzens mit Mutter;

Fig. 2   in perspektivischer Ansicht eine erste Ausführungsform einer hydraulisch arbeitenden Gewindebolzen-Spannvorrichtung, angesetzt in Fluchtung zu dem Gewindebolzen und abgestützt auf dem oberen Maschinenteil. Dargestellt ist zudem ein Handwerkzeug beim Aufschrauben einer Wechselbuchse auf das freie Gewindebolzenende;

Fig. 3   dieselbe Spannvorrichtung wie in Fig. 2, während des axialen Spannprozesses;

Fig. 4   dieselbe Spannvorrichtung wie in Fig. 2 und Fig. 3, während des Nachziehens der Mutter mit dem Handwerkzeug;

Fig. 5   in perspektivischer Ansicht eine zweite Ausführungsform einer hydraulisch arbeitenden Gewindebolzen-Spannvorrichtung einschließlich des angesetzten Handwerkzeugs;

Fig. 6   dieselbe Gewindebolzen-Spannvorrichtung ohne das Handwerkzeug und

Fig. 7   die Gegenstände nach Fig. 5 in einer perspektivischen Explosionsdarstellung.

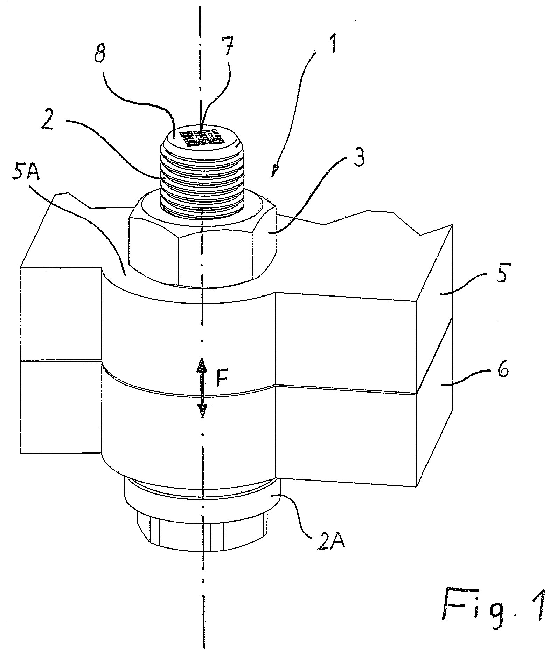

Die in Fig. 1 wiedergegebene Schraubverbindung 1 umfasst einen Gewindebolzen 2, der sich aus einem erweiterten Bolzenkopf 2A und einem Schaft- und Gewindeabschnitt zusammensetzt, und eine auf den Gewindeabschnitt aufgeschraubte Mutter 3. Die Schraubverbindung 1 verspannt hier zwei Maschinenteile 5, 6 gegeneinander. Neben dem Gewindebolzen 2 und der Mutter 3 können auch weitere Bauelemente Bestandteil der Schraubverbindung 1 sein, beispielsweise eine weitere Mutter auf der der Mutter 3 abgewandten Seite des zu verspannenden Maschinenteils 6. Auch zusätzliche Unterlegscheiben können Bestandteil der Schraubverbindung 1 sein.

Am Gewindebolzen 2 ist dauerhaft eine Kennung 7 angeordnet. In Figur 1 ist dies exemplarisch anhand eines an der Stirnseite 8 des Gewindebolzens 2 bzw. des Gewindebolzenendes angeordneten Barcodes 7 gezeigt. Der Barcode 7 wird zunächst mit einem Sensor gescannt. Der Barcode 7 wird dabei vor dem eigentlichen An- oder Nachziehen erfasst. Denn die durch das Scannen gewonnene Information ist Grundlage zur Identifizierung des genauen Typs der Schraubverbindung 1 und damit Voraussetzung für die Ermittlung der für den Spannprozess wichtigen Verschraubungsdaten.

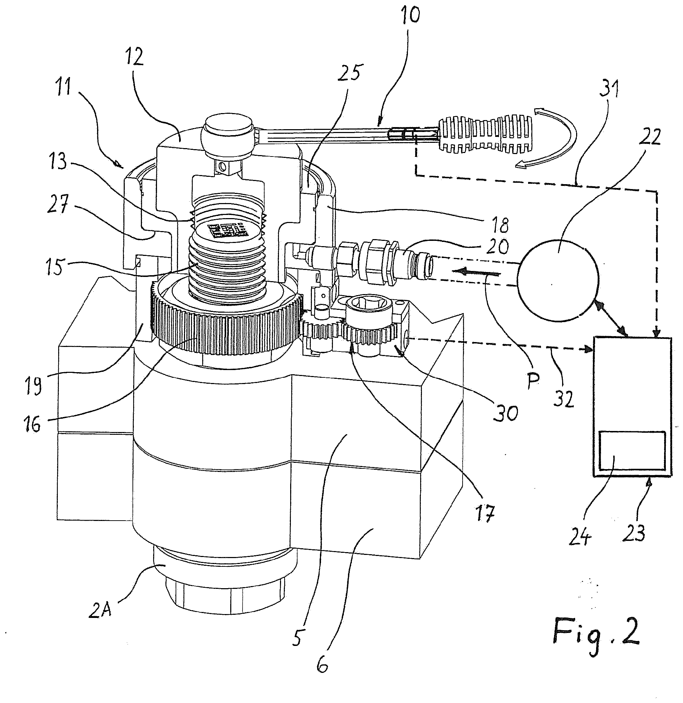

Der Sensor bzw. Scanner kann beispielsweise an einem als Drehmomentschlüssel mit einstellbarem Drehmoment-Auslösewert ausgebildeten Handwerkzeug 10 (Fig. 2) angeordnet sein. Das Handwerkzeug 10 wird, wie nachfolgend beschrieben, ohnehin im Rahmen des Verfahrens benötigt. Alternativ kann der Sensor bzw. Scanner Teil einer mobilen Recheneinheit, z.B. eines Tablet-Computers, eines Smartphones oder einer verwandten mobilen Recheneinheit sein. Beispielsweise kann der Sensor eine Kamera sein. Auch ein separates Scanmodul, welches ausschließlich zum Scannen der Kennung 7 verwendet wird, kann eingesetzt werden. Auch eine Anordnung des Sensors bzw. Scanners direkt in oder an der nachfolgend näher beschriebenen Spannvorrichtung 11 ist möglich. Wird die Spannvorrichtung 11 in diesem Fall auf den zu verspannenden Bolzen 2 aufgesetzt, wird dabei zugleich der Barcode 7 gescannt.

Mittels der Spannvorrichtung 11 wird die Schraubverbindung 1 durch einen ausschließlich axialen Zug am freien Gewindeende 15 des Gewindebolzens 2 längsgedehnt. Für den Dehnprozess können dem Bediener mittels einer Prozesssteuereinheit 23 für den jeweils identifizierten Typ der Schraubverbindung 1 konkrete Verfahrensparameter vorgeschlagen werden, beispielsweise durch Abrufen von in einer Datenbank abgelegten Datenblättern mit entsprechenden Werten. Der Bediener kann die ihm so vorgeschlagenen Parameter dann bestätigen, oder ablehnen.

Bevorzugt wird jedoch ein automatisiertes Verfahren mit durch die Prozesssteuereinheit 23 automatisch durchgeführter Druckeinstellung an einer Hydraulikpumpe 22 der Spannvorrichtung 11, und anschließendem automatischen Aktivieren der Spannvorrichtung.

Die Schraubverbindung wird durch die rein axial arbeitende, hydraulisch betriebene Spannvorrichtung an- bzw. nachgezogen. Dies ist in den Figuren 2 bis 4 dargestellt.

Bei Aktivierung der Spannvorrichtung 11 wird durch axialen Zug an dem über die Mutter 3 hinausragenden Gewindeende des Gewindebolzens 2 der Gewindebolzen 2 der Schraubverbindung 1 auf seinem Schaft- und Gewindeabschnitt längsgedehnt. Die dabei aufgewendete Anzugskraft und/oder der mittels der Hydraulik aufgewendete Anzugsdruck wird vorzugsweise automatisch in einem Dokumentationsmodul 24 gespeichert, und zwar unabhängig davon, ob es sich um eine vom Bediener manuell eingestellte Anzugskraft, oder eine durch die Prozesssteuereinheit 23 automatisch eingestellte, den Werten in einer Datenbank entnommene Anzugskraft und/oder einen Anzugsdruck handelt.

Während bei aktivierter Spannvorrichtung 11 für eine gewisse Zeit die vorgegebene Vorspannkraft auf den Gewindebolzen 2 in Bolzenlängsrichtung ausgeübt wird, kann die Mutter 3 der Schraubverbindung 1 angezogen bzw. nachgezogen werden. Dies geschieht mittels des Handwerkzeugs 10, welches daher als Drehmomentschlüssel mit Auslösefunktion und mit Ratschenmechanismus ausgebildet ist. Das beim Beidrehen der Mutter 3 tatsächlich aufgewendete Anzugsmoment wird in dem Dokumentationsmodul 24 gespeichert werden, welches vorzugsweise Bestandteil der Prozesssteuereinheit 23 ist.

Eine zentral in der Spannvorrichtung 11 längsbeweglich angeordnete Wechselbuchse 12 ist an ihrem unteren Ende mit einem Innengewinde 13 versehen. Mit diesem Innengewinde 13 wird die Wechselbuchse 12 vor Beginn des Spannprozesses auf den über die Mutter 3 hinausragenden Gewindeendabschnitt 15 des Gewindebolzens 2 aufgeschraubt. Dieses Aufschrauben erfolgt vorzugsweise mit dem Handwerkzeug 10. Beim eigentlichen Spannprozess wird die so auf den Gewindebolzen 2 aufgeschraubte Wechselbuchse 12 hydraulisch unter axialen Zug gesetzt, wodurch sich der Gewindebolzen 2 in Längsrichtung dehnt. Dabei herrscht in dem Gewindebolzen eine Zugkraft bzw. Längskraft der Größe F.

Aufgrund des vorübergehenden Längsdehnens des Bolzens 2 kommt die Unterseite der Mutter 3 von der Unterlage 5A frei, so dass sich die Mutter 3 mit relativ wenig Drehwiderstand drehen und bis zur erneuten, spaltfreien Auflage auf der Unterlage 5A nachziehen bzw. beidrehen lässt. Dies erfolgt mit einem durch entsprechende Einstellung an dem Drehmomentschlüssel 10 vorgegebenen Drehmoment bzw. Anzugsmoment.

Eine um die Mutter 3 herum angeordnete und diese formschlüssig mitnehmende Drehhülse 16 wird durch einen Drehantrieb 17 angetrieben. Der Drehantrieb 17 ist entweder Bestandteil der Spannvorrichtung 11 selbst oder er befindet sich, wie dargestellt, in einem außen an ein Zylindergehäuse 18 der Spannvorrichtung 11 angesetzten Modul 30.

Umschlossen ist der hydraulische Spannmechanismus von dem druckfesten Zylindergehäuse 18. Die starre Fortsetzung des Zylindergehäuses 18 nach unten bildet ein die Mutter 3 umgebendes Stützrohr 19. Das Stützrohr 19 kann einstückig mit dem Zylindergehäuse 18 sein, oder alternativ ein gegenüber dem Zylindergehäuse 18 separates, z. B. ein daran ansetzbares Bauteil sein. Das Stützrohr 19 ist an seiner Unterseite offen und stützt sich auf einer festen Unterlage 5A ab, z. B. der Oberseite des Maschinenteils 5, welche Unterlage 5A beim Spannprozess das Widerlager bildet. Bei dem hier beschriebenen Verfahren ist das Widerlager 5A jenes Maschinenteil 5, gegen das sich die Mutter 3 mit ihrer Unterseite abstützt.

Bestandteil des den Drehantrieb 17 bildenden Moduls ist ein Getriebe, welches durch eine Öffnung in dem Stützrohr 19 hindurch auf die Drehhülse 16 arbeitet. Der Drehantrieb 17 bzw. dessen Getriebe bilden daher zusammen mit der Drehhülse 16 die Einrichtung zum Beidrehen der Mutter 3.

Das für das Beidrehen benötigte Drehmoment wird durch Hin- und Herbewegen des an den Drehantrieb 17 ansetzbaren, als ein Ratschenschlüssel ausgebildeten Handwerkzeugs 10 solange aufgebracht, bis ein eingestelltes Drehmoment erreicht ist und entweder ein Drehmomentbegrenzer auslöst oder ein Drehmomentsignal abgibt. Die Mutter 3 kann natürlich sinnvoll nur gedreht werden, solange die Spannvorrichtung 11 aktiv ist.

Seitlich an dem Zylindergehäuse 18 befindet sich ein Hydraulikanschluss 20, über den der hydraulische Arbeitsraum 21 der Spannvorrichtung 11 ventilgesteuert mit der externen Hydraulikversorgung in Gestalt der Hydraulikpumpe 22 verbunden ist. Die externe Hydraulikversorgung samt Hydraulikpumpe 22 kann auf einem Rollwagen angeordnet sein.

In dem Hydraulikzylinder ist, zu der Zylinderinnenwand hin abgedichtet, ein Kolben 25 in Längsrichtung beweglich angeordnet. Durch Einspeisen von hydraulischem Druck in den hydraulischen Arbeitsraum 21 des Zylinders wird der Kolben 25 angehoben. Dies kann beispielsweise entgegen der Kraft einer von oben her den Kolben 25 beaufschlagenden, starken Feder erfolgen, die als Kolbenrückstellfeder dient und den Kolben 25 unmittelbar mit einer Kraft beaufschlagt die bestrebt ist, den Kolben 25 in seiner Grundstellung zu halten, in welcher der hydraulische Arbeitsraum 21 sein Minimum hat.

Der Kolben 25 umgibt ringförmig die Wechselbuchse 12. Er ist an seinem Innenrand mit einer umlaufenden Stufe 27 versehen, die der Unterlage abgewandt, eine Mitnehmerfläche bildet, an der sich die Wechselbuchse 12 mit einem radial erweiterten Abschnitt 28 abstützt. Auf diese Weise ist die Wechselbuchse 12 durch den Kolben 25 axial mitnehmbar.

Die Wechselbuchse 12 ist an ihrem bolzenseitigen Ende mit dem Innengewinde 13 zum Aufschrauben auf den Gewindebolzen 2 versehen. An ihrem oberen Ende ist die Wechselbuchse 12 mit einer Nuss 30 versehen, an die sich ein Mehrkant des Handwerkzeugs 10 ansetzen lässt, um bei der Vorbereitung des Spannprozesses die Wechselbuchse 12 zu drehen und dabei die Wechselbuchse 12 auf den Gewindebolzen 2 aufzuschrauben.

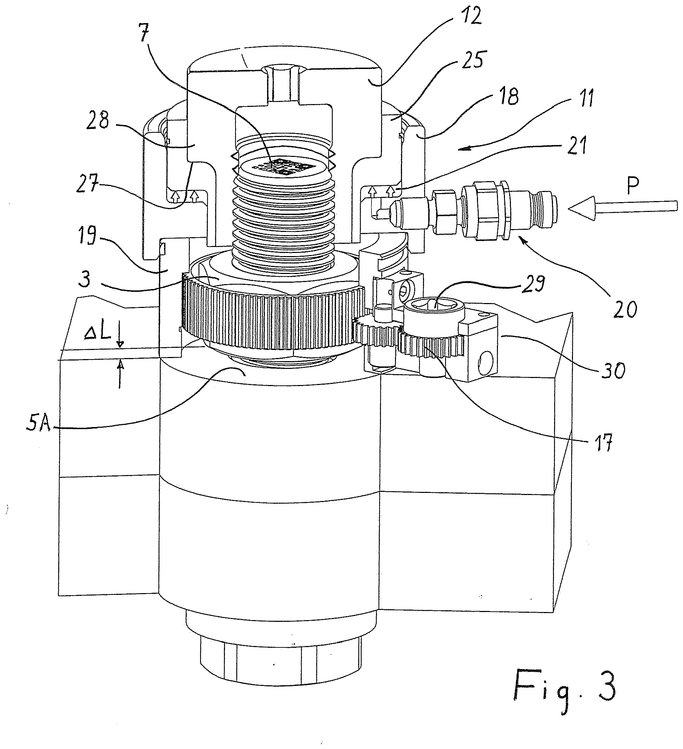

Speist gemäß Fig. 3 die Hydraulikpumpe 22 Druckfluid unter dem Druck P in den Arbeitsraum 21, so hebt der Kolben 25 an und nimmt die an der Mitnehmerfläche 27 abgestützte Wechselbuchse 12 axial mit. Es kommt zu dem Längsdehnen des Gewindebolzens 2 und dem Bilden eines Abstands bzw. Spalts ΔL zwischen der Unterseite der Mutter 3 und der Unterlage 5A.

Der von der Hydraulikpumpe 22 bereitgestellte Druck P wird durch die Prozesssteuereinheit 23 automatisch eingestellt, und zwar aufgrund des durch das Scannen identifizierten Typs der Schraubverbindung 1, und aufgrund der für diesen Typ vorgegebenen Druck- oder Kraftwerte. Alternativ können die Werte manuell durch den Bediener eingestellt werden.

Das Nachziehen, d. h. Beidrehen der Mutter 3 erfolgt an dem in Gestalt des Moduls 30 außen an der Spannvorrichtung 11 angeordneten Drehantrieb 17 unter Verwendung des auf einen vorgegebenen Auslösewert eingestellten Drehmomentschlüssels 10. Dieser wird hierzu an einen Antriebsmehrkant 29 an dem Modul 30 bzw. an dem Drehantrieb 17 angesetzt.

Mindestens eines der Getriebeelemente des Drehantriebs 17 oder alternativ der Drehmomentschlüssel 10 ist mit einem Drehwinkelsensor versehen. Dieser erfasst einen Drehwinkel, welcher im Laufe des Anziehens der Mutter 3 bis zum Auslösen des Drehmomentschlüssels 10 insgesamt zurückgelegt wird. Der erfasste Drehwinkel kann entweder der Drehwinkel der Mutter 3 selbst sein, oder ein anderer charakteristischer Drehwinkel, den eines der sich drehenden Getriebeelemente des Drehantriebs oder den der Drehmomentschlüssel 10 ausführt.

Der so erfasste Winkelwert wird zwecks weiterer Auswertung zunächst gespeichert, wozu der Drehwinkelsensor signaltechnisch mit der Prozesssteuereinheit 23 verbunden ist, so dass in der Prozesssteuereinheit 23 der erfasste Drehwinkelwert zwecks dessen weiterer Verarbeitung und Auswertung zur Verfügung steht.

Bei dieser Auswertung wird aus dem während des Beidrehens der Mutter 3 zurückgelegten Drehwinkelwert in Verknüpfung mit der bekannten Gewindesteigung des Gewindebolzens 2 und der Mutter 3 die bleibende Dehnung und mithin Längung des Gewindebolzens 2 berechnet. Dieser Wert der Längung kann in dem Dokumentationsmodul 24 gespeichert und so dauerhaft dokumentiert werden.

Ist der vorgegebene Drehwinkel, entsprechend der Längung des Gewindebolzens 2, zurückgelegt und wird die Mutter 3 danach mit einem vorgegebenen Drehmoment bis zu ihrer spaltfreien Anlage an der Unterlage 5A beigedreht, so ist sichergestellt, dass der Gewindebolzen 2 mit der richtigen Kraft angezogen wurde und dass der Wert F der in dem Gewindebolzen 2 herrschenden Längskraft eine bestimmte, optimale Größe aufweist bzw. in einem entsprechenden Größenbereich liegt. Denn die nach dem Anziehen oder Nachziehen der Schraubverbindung in dem längsverformten Gewindebolzen 2 herrschende Längskraft F steht für die Zugspannung in dem Bolzen 2 steht. Sie ist abhängig von der Längung, die der Gewindebolzen 2 während des Spannprozesses erfährt.

In einem ersten Rechenschritt wird die mit dem Längsdehnen verbundene Längung des Gewindebolzens 2 errechnet, und zwar aus

- dem während des Beidrehens der Mutter 3 zurückgelegten Drehwinkel

- und der Gewindegeometrie der Schraubverbindung 1.

Dabei ist der zurückgelegte Drehwinkel nicht unbedingt der Drehwinkel der Mutter 3 selbst, sondern dies kann auch ein anderer, mit dem Drehwinkel der Mutter 3 gekoppelter Drehwinkel sein. Zum Beispiel kann ein Getriebeelement des Drehantriebs 17 mittels eines Drehwinkelsensors detektiert werden, oder der Drehwinkelsensor ist baulich in das Zylindergehäuse der Spannvorrichtung 11 integriert, oder er ist baulich in den Drehmomentschlüssel 10 integriert.

Die in dem ersten Rechenschritt als Rechenparameter herangezogene Gewindegeometrie der Schraubverbindung ist die Gewindesteigung des Gewindes am Gewindebolzen 2 und der Mutter 3. Denn aus den zwei geometrischen Größen Drehwinkel und Gewindesteigung lässt sich unmittelbar ein Längsmaß errechnen, hier also die Größe der mit dem axialen Spannen erreichten Längsdehnung des Gewindebolzens 2, also dessen Längung.

In einem zweiten Rechenschritt wird dann die in Zugrichtung wirkende Längskraft F im Gewindebolzen 2 errechnet, und zwar aus

- der in dem ersten Rechenschritt ermittelten Längung des Gewindebolzens 2,

- dem Bolzendurchmesser des Gewindebolzens 2

- und der Bolzenlänge.

Die Längskraft F lässt sich z. B. wie folgt berechnen. Darin ist E das Elastizitätsmodul des Bolzenwerkstoffs, A die Größe des Bolzenquerschnitts, L die charakteristische Bolzenlänge, und dL die Bolzenverlängerung.

$$F = \frac{dL}{L} \times (E \times A)$$

Die für die Berechnung der Längskraft F im Gewindebolzen 2 herangezogene Bolzenlänge ist nicht die absolute Länge des Gewindebolzens 2 einschließlich des radial erweiterten Bolzenkopfes 2A. Entscheidend ist vielmehr jene Länge, auf der sich der Gewindebolzen nennenswert verformt. Die insoweit maßgebliche charakteristische Bolzenlänge bilden Teile des Gewindeabschnitts des Gewindebolzens 2 und, falls vorhanden, ein gewindeloser Schaftabschnitt des Gewindebolzens. Die in dem zweiten Rechenschritt herangezogene, charakteristische Bolzenlänge ist dabei jene Länge des Gewindeabschnitts und gegebenenfalls des Schaftabschnitts, welche sich zwischen dem Bolzenkopf 2A und der sich ebenfalls im Wesentlichen starr verhaltenden Mutter 3 erstreckt. Nur auf diesem Längsabschnitt findet beim Spannprozess eine nennenswerte Längung statt.

Um für die Längskraft F im Gewindebolzen 2 einen genauen Wert errechnen zu können, kommt es auf Genauigkeit beim Nachziehen der Mutter 3 an. Denn beim Nachziehen der Mutter kann es Setzungsprozesse geben, vor allem aufgrund von Unebenheiten an den Kontaktflächen. Aus diesem Grunde wird mehrstufig vorgegangen. In einer Vorstufe wird, um Fehlmessungen infolge der Setzungsprozesse soweit als möglich zu eliminieren, die Spannvorrichtung 11 zunächst nur mit einem relativ geringen hydraulischen Druck von z.B. 50 bar aktiviert. Ist dieser Vordruck erreicht, wird die Mutter 3 in dem Verfahrensschritt a) mittels des Drehantriebs 17 mit einem solchen vorgegebenen Anzugsmoment angezogen, dass es zu einer weitgehend spaltfreien Anlage der Mutter 3 an der Unterlage 5A kommt und Setzungsprozesse eliminiert sind.

Erst nachdem mittels dieser Vorstufe der weitgehend spaltfreie Kontakt der Mutter zur Unterlage sichergestellt ist, erfolgt in Schritt b) der eigentliche Spannprozess durch Aktivieren der Spannvorrichtung 11 und damit Längsdehnen der Schraubverbindung 1. Dabei wird in der Spannvorrichtung 11 der deutlich höhere Systemdruck von z.B. 1500 bar eingestellt. Unter Aufrechterhaltung des dabei ausgeübten axialen Zugs erfolgt dann in Schritt c) das erneute Nachziehen bzw. Beidrehen der Mutter 3 und das Erfassen eines während dieses erneuten Nachziehens zurückgelegten Drehwinkels mittels des Drehwinkelsensors.

Das erneute Nachziehen der Mutter 3 nach Schritt c) wird mit demselben Anzugsmoment durchgeführt, wie zuvor in der Vorstufe das erstmalige Nachziehen der Mutter nach Schritt a).

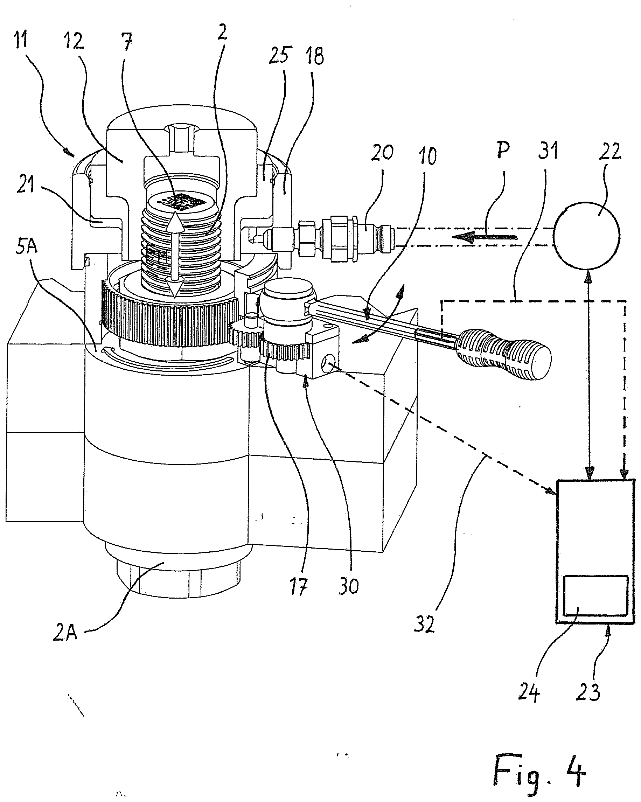

Gemäß Fig. 4 wird, mittels des Drehmomentsensors, das bei dem Nachziehen der Mutter 3 tatsächlich verwendete Drehmoment messtechnisch erfasst. Der Drehmomentsensor ist hier in den Drehmomentschlüssel 10 integriert. Der entsprechende Drehmomentwert wird von dem Drehmomentschlüssel 10 über den Signalweg 31 signaltechnisch an die Prozesssteuereinheit 23 übertragen und wird ebenfalls in dem Dokumentationsmodul 24 gespeichert. Über den Signalweg 32 wird der Drehwinkelwert übertragen.

Die Übertragung der beim Anziehen bzw. Beidrehen der Mutter 3 erfassten Daten und Messwerte an die Prozesssteuereinheit 23 erfolgt über die Signalwege 31, 32 und vorzugsweise über drahtlos arbeitende Sende- und Empfangseinheiten. In dem Dokumentationsmodul 24 der Prozesssteuereinheit 23 wird der zurückgelegte Drehwinkel, das tatsächlich aufgewendete Drehmoment und die errechnete Längskraft F im Gewindebolzen 2 gemeinsam mit der individuellen Kennung der Schraubverbindung 1 gespeichert. Diese Größen können in dem Dokumentationsmodul 24 zum Beispiel in Datentabellen oder in Parameterdateien gespeichert werden. Die dokumentierten Daten können, z. B. später zu Beweiszwecken, aufgerufen und exportiert werden.

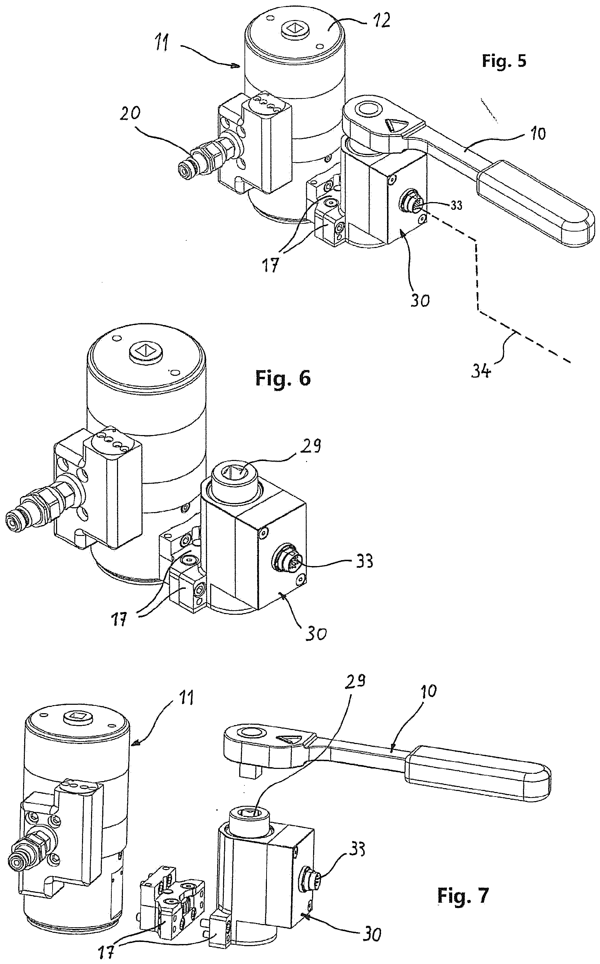

In den Figuren 5 bis 7 ist eine zweite Ausführungsform wiedergegeben. Dabei beziehen sich dieselben Bezugszeichen auf Bauteile, welche den ebenso bezeichneten Bauteilen bei der ersten Ausführungsform entsprechen.

Unterschiedlich zu der ersten Ausführungsform ist das an die Spannvorrichtung 11 angesetzte Modul 30. Darin integriert ist nicht nur der Drehantrieb 17 der Beidrehvorrichtung, sondern auch der Drehmomentsensor, welcher das beim Anziehen und beim erneuten Anziehen der Mutter verwendete Drehmoment erfasst. Das Modul 30 ist mit einem Signalanschluss 33 versehen, über den neben dem Drehwinkelwert auch der Drehmomentwert an die Prozesssteuereinheit 23 übermittelt wird.

Bei der zweiten Ausführungsform ist also insgesamt nur ein Signalweg 34 erforderlich, auf dem sowohl der an dem Drehantrieb 17 erfasst Drehwinkel, als auch das erfasste Drehmoment an die Prozesssteuereinheit 23 übermittelt wird. Dies kann mittels eines Signalkabels erfolgen oder drahtlos mittels entsprechender Sende- und Empfangseinheiten einerseits an dem Modul 30 und andererseits auf Seiten der Prozesssteuereinheit 23.

Auch bei der zweiten Ausführungsform werden in dem Dokumentationsmodul 24 der Prozesssteuereinheit 23 der zurückgelegte Drehwinkel, das tatsächlich aufgewendete Drehmoment und die errechnete Längskraft F im Gewindebolzen 2 gemeinsam mit der individuellen Kennung der Schraubverbindung 1 gespeichert.

**Bezugszeichenliste**

| 1 | Schraubverbindung |
|---|---|
| 2 | Gewindebolzen |
| 2A | Bolzenkopf |
| 3 | Mutter |
| 5 | Maschinenteil |
| 5A | Unterlage |
| 6 | Maschinenteil |
| 7 | Kennung, Barcode |
| 8 | Stirnseite |
| 10 | Handwerkzeug, Drehmomentschlüssel |
| 11 | Spannvorrichtung |
| 12 | Wechselbuchse |
| 13 | Innengewinde |
| 15 | Gewindeende |
| 16 | Drehhülse |
| 17 | Drehantrieb, Beidrehvorrichtung |
| 18 | Zylindergehäuse |
| 19 | Stützrohr |
| 20 | Hydraulikanschluss |
| 21 | Arbeitsraum |
| 22 | Hydraulikpumpe |
| 23 | Prozesssteuereinheit |
| 24 | Dokumentationsmodul |
| 25 | Kolben |
| 27 | Stufe |
| 28 | radial erweiterter Abschnitt |
| 29 | Antriebsmehrkant |
| 30 | Modul |
| 31 | Signalweg |
| 32 | Signalweg |
| 33 | Signalanschluss |
| 34 | Signalweg |

F    Längskraft
ΔL   Länge, Spalt
P    Druck

## Patentansprüche

1. Verfahren zum dokumentierten Anziehen oder Nachziehen einer Schraubverbindung (1) bestehend aus einem Gewindebolzen (2) und einer darauf aufgeschraubten und sich gegen eine Unterlage (5A) abstützenden Mutter (3), unter Einsatz einer axial arbeitenden Spannvorrichtung (11) umfassend ein Zylindergehäuse (18), eine darin angeordnete Wechselbuchse (12), die an ihrem dem Gewindebolzen (2) zugewandten Ende mit einem Innengewinde (13) versehen und auf den Gewindebolzen (2) aufschraubbar ist, und mindestens einen in dem Zylindergehäuse (18) axial bewegbaren, mit hydraulischem Druck (P) beaufschlagbaren Kolben (25), durch den die Wechselbuchse (12) axial mitnehmbar ist, und ferner unter Einsatz eines als Modul außen an das Zylindergehäuse (18) ansetzbaren Drehantriebs (17) für die Mutter (3) und einer mit einem Dokumentationsmodul (24) versehenen Prozesssteuereinheit (23), wobei das Verfahren folgende Schritte umfasst:

   a) mittels des Drehantriebs (17) Anziehen der Mutter (3) mit einem für eine spaltfreie Anlage der Mutter an der Unterlage (5A) mindestens erforderlichen Anzugsmoment;
   b) durch Aktivieren der Spannvorrichtung (11) Längsdehnen der Schraubverbindung (1) durch Ausüben axialen Zugs an dem über die Mutter (3) hinausragenden Gewindeende (15) des Gewindebolzens (2);
   c) unter Aufrechterhalten des Längsdehnens erneutes Anziehen der Mutter (3) mittels des Drehantriebs (17), hierbei Erfassen eines während dieses erneuten Anziehens zurückgelegten Drehwinkels mittels eines Drehwinkelsensors;
   d) Errechnen der mit dem Längsdehnen verbundenen Längung des Gewindebolzens (2) aus

      - dem zurückgelegten Drehwinkel und
      - der Gewindegeometrie der Schraubverbindung (1);

   e) Errechnen einer Längskraft (F) im Gewindebolzen (2) aus

      - der Längung,
      - dem Bolzendurchmesser und
      - der Bolzenlänge;

   **dadurch gekennzeichnet, dass** die errechnete Längskraft (F) zusammen mit einer die Schraubverbindung (1) identifizierenden Kennung in dem Dokumentationsmodul (24), gespeichert wird, dass das Anziehen und das erneute Anziehen der Mutter (3) mit demselben Anzugsmoment unter Kraftausübung mittels eines an den Drehantrieb (17) ansetzbaren Handwerkzeugs (10) durchgeführt wird, dass das beim Anziehen und beim erneuten Anziehen der Mutter (3) verwendete Drehmoment mittels eines Drehmomentsensors erfasst wird und ein entsprechender Drehmomentwert in dem Dokumentationsmodul (24) gespeichert wird und dass das Erfassen des Drehmoments beim Anziehen und erneuten Anziehen der Mutter (3) in dem Modul erfolgt.

2. Verfahren nach Anspruch 1, **dadurch gekennzeichnet, dass** die Schraubverbindung (1) durch Scannen einer an der Schraubverbindung vorhandenen Kennung (7), vorzugsweise einer Barcode-Kennung, identifiziert wird.

3. Verfahren nach einem der Ansprüche 1 - 2, **dadurch gekennzeichnet, dass** dem Bediener nach Identifikation der Schraubverbindung (1) eine in einer Datenbank gespeicherte Anzugskraft und/oder ein Anzugsdruck von der Prozesssteuereinheit (23) mitgeteilt wird, bevor die Spannvorrichtung (11) aktiviert wird.

4. Verfahren nach einem der Ansprüche 1 - 2, **dadurch gekennzeichnet, dass** nach Identifikation der Schraubverbindung (1) eine in der Datenbank gespeicherte Anzugskraft und/oder Anzugsdruck automatisch von der Prozesssteuereinheit (23) ausgewählt, und dass eine an die Spannvorrichtung (11) angeschlossene Hydraulikpumpe automatisch auf diesen Druck gefahren wird.

5. Verfahren nach einem der Ansprüche 1 - 2, **dadurch gekennzeichnet, dass** nach Identifikation der Schraubverbindung (1) eine in einer Datenbank gespeicherte Anzugskraft und/oder ein Anzugsdruck automatisch von der Prozesssteuereinheit (23) ausgewählt, und die Spannvorrichtung (11) unter Verwendung der ausgewählten Werte automatisch durch die Prozesssteuereinheit (23) aktiviert wird.

6. Verfahren nach Anspruch 1, **dadurch gekennzeichnet, dass** das Erfassen des Drehwinkels durch Anordnung des Drehwinkelsensors in dem Modul erfolgt.

7. Verfahren nach Anspruch 1, **dadurch gekennzeichnet, dass** das Erfassen des Drehwinkels durch Anordnung des Drehwinkelsensors an einem an den Drehantrieb (17) ansetzbaren Drehmomentschlüssel (10) erfolgt.

8. Verfahren nach Anspruch 1, **dadurch gekenn-**

**zeichnet, dass** das Erfassen des Anzugsmoments beim Anziehen und erneuten Anziehen der Mutter (3) an einem an den Drehantrieb (17) ansetzbaren Drehmomentschlüssel (10) erfolgt.

**Claims**

1. Method for the documented tightening or retightening of a screw connection (1) consisting of a threaded bolt (2) and a nut (3) screwed onto the threaded bolt and supported against a support (5A), by using an axially operating tensioning device (11) comprising a cylinder housing (18), an exchangeable bush (12) which is arranged in the cylinder housing and at the end thereof facing the threaded bolt (2) is provided with an internal thread (13) and able to be screwed onto the threaded bolt (2), and at least one piston (25) which is able to be moved axially in the cylinder housing (18) and able to be impinged with hydraulic pressure (P) and by way of which the exchangeable bush (12) is axially entrainable, and further using a rotary drive (17) for the nut (3), which is attachable as a module externally to the cylinder housing (18), and a process control unit (23) provided with a documentation module (24), wherein the method comprises the following steps:

   a) tightening the nut (3) by means of the rotary drive (17) with a tightening torque which is at least required for the nut to bear on the support (5A) without a gap;
   b) longitudinally elongating the screw connection (1) by activating the tensioning device (11) by exerting axial tension on the thread end (15) of the threaded bolt (2) that protrudes beyond the nut (3);
   c) further tightening the nut (3) by means of the rotary drive (17) while maintaining the longitudinal elongation, detecting a rotation angle covered during this further tightening by means of a rotation angle sensor in the process;
   d) computing the lengthening of the threaded bolt (2) associated with the longitudinal elongation from

   - the rotation angle covered and
   - the thread geometry of the screw connection (1);

   e) computing a longitudinal force (F) in the threaded bolt (2) from

   - the lengthening,
   - the bolt diameter and
   - the bolt length;

   **characterized in that** the computed longitudinal force (F), conjointly with an identifier identifying the screw connection (1), is stored in the documentation module (24), **in that** the tightening and the further tightening of the nut (3) is carried out with the same tightening torque while exerting a force by means of a hand tool (10) attachable to the rotary drive (17), **in that** the torque used when tightening and when further tightening the nut (3) is detected by means of a torque sensor and a corresponding torque value is stored in the documentation module (24), and **in that** detecting the torque takes place when tightening and further tightening the nut (3) in the module.

2. Method according to Claim 1, **characterized in that** the screw connection (1) is identified by scanning an identifier (7), preferably a barcode identifier, present on the screw connection.

3. Method according to one of Claims 1 - 2, **characterized in that**, after identification of the screw connection (1), a tightening force stored in a database and/or a tightening pressure is communicated to the operator by the process control unit (23) before the tensioning device (11) is activated.

4. Method according to one of Claims 1 - 2, **characterized in that**, after identification of the screw connection (1), a tightening force stored in the database and/or tightening pressure is automatically selected by the process control unit (23), and **in that** a hydraulic pump connected to the tensioning device (11) is automatically actuated to this pressure.

5. Method according to one of Claims 1 - 2, **characterized in that**, after identification of the screw connection (1), a tightening force stored in a database and/or a tightening pressure is automatically selected by the process control unit (23), and the tensioning device (11) is automatically activated by the process control unit (23) while using the selected values.

6. Method according to Claim 1, **characterized in that** detecting the rotation angle takes place by arranging the rotation angle sensor in the module.

7. Method according to Claim 1, **characterized in that** detecting the rotation angle takes place by arranging the rotation angle sensor on a torque wrench (10) attachable to the rotary drive (17).

8. Method according to Claim 1, **characterized in that** detecting the tightening torque when tightening and further tightening the nut (3) takes place on a torque wrench (10) attachable to the rotary drive (17).

## Revendications

**1.** Procédé de serrage ou resserrage documenté d'une liaison vissée (1) comprenant un boulon fileté (2) et un écrou (3) vissé sur celui-ci et s'appuyant contre un appui (5A), à l'aide d'un dispositif de serrage à action axiale (11) comprenant un boîtier cylindrique (18), une douille interchangeable (12) qui est disposée dans celui-ci et qui est munie d'un filetage intérieur (13) à son extrémité dirigée vers le boulon fileté (2) et qui peut être vissée sur le boulon fileté (2), et au moins un piston (25) qui est mobile axialement dans le boîtier cylindrique (18), qui peut être actionné par une pression hydraulique (P), et qui permet de déplacer la douille interchangeable (12) axialement et en outre à l'aide d'un entraînement en rotation (17) destiné à l'écrou (3) et pouvant être fixé comme module à l'extérieur du boîtier cylindrique (18) et une unité de commande de processus (23) pourvue d'un module de documentation (24), le procédé comprenant les étapes suivantes :

a) au moyen de l'entraînement en rotation (17), serrer l'écrou (3) avec un couple de serrage minimum nécessaire à un contact sans jeu de l'écrou sur l'appui (5A) ;
b) par activation du dispositif de serrage (11), étirer longitudinalement la liaison vissée (1) ce qui exerce une tension axiale sur l'extrémité filetée (15) du boulon fileté (2) qui dépasse de l'écrou (3) ;
c) tout en maintenant l'étirement longitudinal, resserrer l'écrou (3) au moyen de l'entraînement en rotation (17), détecter ainsi un angle de rotation parcouru lors de ce resserrage au moyen d'un capteur d'angle de rotation ;
d) calculer l'allongement du boulon fileté (2) lié à l'étirement longitudinal à partir

- de l'angle de rotation parcouru et
- de la géométrie de filetage de la liaison vissée (1) ;

e) calculer une force longitudinale (F) dans le boulon fileté (2) à partir

- de l'allongement,
- du diamètre du boulon et
- de la longueur du boulon ;

**caractérisé en ce que** la force longitudinale (F) calculée est mémorisée dans le module de documentation (24) conjointement avec un identifiant qui identifie la liaison vissée (1), **en ce que** le serrage et le resserrage de l'écrou (3) sont effectués avec le même couple de serrage pendant l'application d'une force au moyen d'un outil à main (10) pouvant être fixé sur l'entraînement en rotation (17), **en ce que** le couple utilisé lors du serrage et du resserrage de l'écrou (3) est détecté au moyen d'un capteur de couple et une valeur de couple correspondante est mémorisée dans le module de documentation (24) et **en ce que** la détection du couple est effectuée lors du serrage et du resserrage de l'écrou (3) dans le module.

**2.** Procédé selon la revendication 1, **caractérisé en ce que** la liaison vissée (1) est identifiée par balayage d'un identifiant (7), de préférence un identifiant à code à barres, présent sur la liaison vissée.

**3.** Procédé selon l'une des revendications 1 à 2, **caractérisé en ce que**, après identification de la liaison vissée (1), l'opérateur est informé d'une force de serrage et/ou d'une pression de serrage mémorisée dans une base de données par l'unité de commande de processus (23) avant que le dispositif de serrage (11) ne soit activé.

**4.** Procédé selon l'une des revendications 1 à 2, **caractérisé en ce que**, après identification de la liaison vissée (1), une force de serrage et/ou une pression de serrage, mémorisées dans la base de données, sont sélectionnées automatiquement par l'unité de commande de processus (23) et **en ce qu'**une pompe hydraulique, raccordée au dispositif de serrage (11), est automatiquement entraînée à cette pression.

**5.** Procédé selon l'une des revendications 1 à 2, **caractérisé en ce que**, après identification de la liaison vissée (1), une force de serrage et/ou une pression de serrage, mémorisées dans une base de données, sont automatiquement sélectionnées par l'unité de commande de processus (23) et le dispositif de serrage (11) est activé par l'unité de commande de processus (23) à l'aide des valeurs sélectionnées.

**6.** Procédé selon la revendication 1, **caractérisé en ce que** la détection de l'angle de rotation est effectuée par disposition du capteur d'angle de rotation dans le module.

**7.** Procédé selon la revendication 1, **caractérisé en ce que** l'angle de rotation est détecté par disposition du capteur d'angle de rotation sur une clé dynamométrique (10) qui peut être fixée à l'entraînement en rotation (17).

**8.** Procédé selon la revendication 1, **caractérisé en ce que** le couple de serrage est détecté lors du serrage et du resserrage de l'écrou (3) sur une clé dynamométrique (10) pouvant être fixée à l'entraînement en rotation (17).

EP 3 698 924 B1

Fig. 1

Fig.2

Fig. 3

Fig. 4

**Fig. 5**

**Fig. 6**

**Fig. 7**

**IN DER BESCHREIBUNG AUFGEFÜHRTE DOKUMENTE**

**In der Beschreibung aufgeführte Patentdokumente**

- DE 10145847 A1
- WO 03024670 A1
- WO 2008092768 A2
- WO 2010054959 A1
- DE 102015104133 A1
- DE 102012105654 A1